# EUROPEAN PATENT APPLICATION

(11) **EP 1 741 542 A2**
(43) Date of publication of application: **10.01.2007**
(21) Application number: 04821213.8
(22) Date of filing: 21.10.2004
(51) Int. Cl.: B29C 47/12, B29C 47/00, C08L 23/02, B29K 23/00, B29K 75/00, B29K 83/00

(54) **METHOD FOR MOULDING A THERMOPLASTIC POLYMERIC MATERIAL, DEVICE FOR CARRYING OUT SAID METHOD AND THE COMPOSITION OF THE THERMOPLASTIC POLYMERIC MATERIAL**

(30) Priority: 21.01.2004 RU 2004101391
(71) Applicant: Kulikov, Oleg Leonidovich, 85764 Oberschleissheim (DE)
(72) Inventor: Kulikov, Oleg Leonidovich, 85764 Oberschleissheim (DE)
(86) International application number: PCT/RU2004/000416
(87) International publication number: WO 2005/070650

(57) **Abstract**

The present invention relates to processing of thermoplastic polymers, for example to injection molding and extrusion. More particularly the present invention relates to extrusion of polyolefin resins, especially polyethylene resin, and could be used in manufacture of polymer profile, isolating jacketing at electrical cable, polymer tube and film in blown film process. The present invention is directed to increase rate of defect free extrusion. Other objects of the present invention are: to lower cost of the used additives, to lower amount of additives during extrusion of polymer melts with fillers, to simplify design of equipment, which is used for processing of polymeric materials, to save energy, which is necessary for processing, to improve product appearance and its mechanical performances. In accordance with the present invention molten thermoplastic polymeric material is comprising additives of elastomers and an elastic layer substantially coats at least a portion of the die cavity inner wall adjacent to the die exit during extrusion. A composition of thermoplastic polymeric material is comprising polyolefins and elastomers, wherein said elastomers are selected from thermoplastic elastomers based on block copolymers or raw rubbers which cure in situ at the die inner wall. In a particular embodiment of the present invention a die inner wall has catalytic activity to appropriate reaction of rubber vulcanization.

## Description

### BACKGROUND OF THE INVENTION

The present method, apparatus and composition of thermoplastic material relates to processing of thermoplastic polymers, for example to injection molding and extrusion. More particularly the present invention relates to extrusion of polyolefin resins, especially polyethylene resin, and could be used in manufacture of polymer profile, isolating jacketing at electrical cable, polymer tube and film in blown film process.

Polymers produced with the use of metallocene catalysts are characterized by narrow molecular weight distribution of polymer chains and improved toughness but are subject to roughness known as "shark skin" or "snail skin" during processing at rate, which is moderate for industry. Onset of the defects limits rate of plastics processing. The most common plastics in industry is polyethylene. Polyethylene produced with metallocene catalysts replaces old type of liner low-density polyethylene at market of polyethylene film. Polyethylene is used mostly for film manufacturing (about 60 per cent of total demand) by extrusion and blown film technique. In extrusion of polyethylene with narrow molecular weight distribution already at moderate rate of extrusion (about 10 mm per sec) the surface of extruded tube shows up roughness and thin film made by blowing of such tube is characterized by low gloss and scatters both transmitted and reflected light, what lowers product quality.

The use of fluorinated hydrocarbons as additives in polymeric material to diminish roughness of the product surface and die drool depositions is known since 60-s [1]. The additives coat surface of processing equipment and lubricate the surface. For example, it is shown in a patent [2] that extrusion of elastomers blended with fluorinated hydrocarbons in amount from 0.002 till 2 weight %, where the fluorinated hydrocarbons have structure of polymer chain (CF₂-CH₂)ₙ -(CF₂-CF.CF₃)ₘ, n/m is about 7/3 and softening point is between 100°C and 300°C, provides defect free product at higher rate of extrusion.

Following additives are commercially available as polymer processing aids: "Viton® FreeFlow™" from DuPont [3], "DYNAMAR" from Dyneon (3M) [4], "KYNAR" from Atofina Chemicals [5]. With amount of these additives about 0.04 weight % it is possible to increase defect free rate of extrusion 2-4 times higher. The use of diblock copolymers of PTFE and acrylic polymers with trademark "METABLEN - A" in processing of polyolefin resins is known from [6].

In summarizing analysis of the analogues, which correspond to the use of fluorinated polymers, it is possible to note that their drawbacks are high cost and insufficient improvement in rate of defect free extrusion. Additionally, presence of fluorinated polymers in film complicates hot welding of polyethylene for packaging.

Industry uses blends of polymers with antioxidants, stabilizing agents, additives to diminish accumulation of static electricity, organic an inorganic fillers, dyes and colorants, softening agents, additives to prevent sticking of polymer products, e.g. antiblock agents for polymer film, polymer processing aids, oils, etc. In the case of extrusion of plastics with fillers abrasive particles quickly wear the thin and liquid lubrication layer at metal surface. Deposition rate of the coating from fluorinated polymers could be less then wear rate even at content of the additives above 2 per cent, what is unacceptable in industrial production.

There is a big demand of relatively cheap additives, which enhance product manufacturing with no sacrifice in its mechanical or organoleptic properties. It is especially important for film manufacturing from polyolefins, blends and/or copolymers of polyolefins and elastomers. Silicones and silicone rubbers are not costly and widely available chemical substances with wide range of viscosity. The use of silicones in plastics processing is well known. It is proposed in [7-9] to use polysiloxanes as antiblock agents to prevent sticking of polymer film. For example, in a patent [10] it was proposed to use particles of not melting silicone polymer with size from 0.5 to 7 µm to prevent sticking of polymer film (antiblock agents) and as additives to get defect free surface at elevated rate of extrusion. Company Dow Coming [11] manufactures such powders for the use in polymer blends in amount from 0.1 to 40 weight %. It is proposed also to use a master batch "DOW CORNING® MB50-313 MASTERBATCH", which has 50 weight % of such siloxanes, and to add from 0.2 to 10 weight % of the siloxanes to diminish melt fracture of linear low-density polyethylene (LLDPE). Not melting (cross linked) polysiloxanes in form of powder with size of particles from 2 to 6 µm are available under tradename "Tospearl" from Company GE Silicones [12] for the use as additives. There are technical proposals [13-17] about thermoplastic blends with reacting components of silicone rubber and with content of silicone rubber in the thermoplastic blend from 1 to 60 weight %. Such blends with raw elastomers have to be cured after extrusion or molding to produce three-dimensional network of rubber inside thermoplastic matrix. The use of silicones in thermoplastic blends simplifies separation of parts from mold and diminishes abrasive wear and surface contamination of the products.

In patents [18,19] it was proposed to use additives of polysiloxanes with polar groups to improve mechanical and optical properties of film from polyolefins. In a patent [20] it was proposed to use organo- siloxanes with structure of linear diblock copolymer in combination with organo- phosphoric chemical compounds. It was proposed in a patent [21] to use diorganosiloxanes with molecular weight above 10,000 atomic mass units (a.m.u.) with hydroxyl groups. It was proposed in a patent [22] to use diblock copolymer organo-siloxane with molecular weight above 40,000 a.m.u. and with at least one hydroxyl group. It was proposed in a patent [23] to use additives of organo-phosphoric adjuvant and organo-siloxane with molecular weight above 10,000 a.m.u. and at least one hydroxyl group for the case of the die with Nickel coating.

In summarizing analysis of the analogues, which relate to the use of polysiloxanes as additives to diminish product roughness, it is possible to note that the known compositions provide insufficient improvement in rate of defect free extrusion.

There are technical solutions, which propose to use additives of not vulcanized fluorinated elastomers. Patent [24] taught that during extrusion of polyolefins with additives of fluorinated polymers having melting point from 120°C to 300°C but not above processing temperature and in amount from 0.005 to 2 weight %, it is possible to get defect free product at higher extrusion rate. In description of patent [25] the use of not vulcanized fluorinated elastomer is described, which is a copolymer of tetrafluoroethylene and perfluorinated alkyl ether, as additive to improve quality of Teflon (PTFE) coating. In patent [26] a method of processing is described, which comprises mixing of not vulcanized elastomer, which is a copolymer of tetrafluoroethylene with perfluorinated alkylether, with thermoplastic polymeric material in amount of additives from 0.05 to 0.5 weight %, heating till melting and extrusion of the polymeric material.

The closest to the present invention is a method of extrusion [27] of molten polymer with additives of fluorinated polymer through a die having surface coated by layer comprising one or more metal oxides from a flowing group: Ti, Zr, Cr, Fe, Ni, Pd, Pt, Cu, Ag, Au, Al, Si, while the fluorinated polymer is characterized by improved adhesion to the oxide layer. In one particular realization of the proposal not vulcanized fluorinated elastomer is used as a fluorinated polymer. Improvement of adhesion of the lubrication layer to the surface diminishes wear of the lubricant by polymer melt.

In a description of this patent a die design is disclosed in details. The die is characterized by coating comprising metal oxides from a group referred above. There are examples of coating at metal surface.

In description of the patent chemical composition of additives is disclosed. The fluorinated polymers and fluorinated elastomers have polar groups and able to react chemically or adhere physically to the surface of oxides. The examples of polar groups are following: -COF, -SO₃M, -OSO₃M, -OH, -COOM, where M is hydrogen, alkali metal ion or ammonia cation, -SO₂F, -SO₂Cl, -COOR, where R is alkyl radical with amount of atoms up to 3. It is shown that especially fluorinated polymers and fluorinated elastomers developed by inorganic peroxides and having polar end groups -COOH or -COF bring increase in rate of defect free extrusion. Detailed composition of polymer blend, comprising polymer or copolymer of olefins, additives of fluorinated polymers and filler are also disclosed. However, there is no teaching about an impact of elastic properties of additives at product quality.

In summarizing of the analogues of the proposed technical solution, which relate to the use of not vulcanized fluorinated elastomers as additives, it is possible to note that the use of these additives does not result in elastic coatings at the die surface. A drawback of the known technical solutions is insufficient improvement in rate of defect free extrusion.

In summarizing of all analogues of the proposed technical solution, it is possible to note that there are no known methods, which could noticeably increase rate of the defect free extrusion, especially in extrusion of polymers comprising rigid abrasive particles. There are no known compositions of additives, which could be used to enlarge defect free extrusion and simultaneously do not sacrifice product quality.

### OBJECTS OF THE INVENTION

The present invention is directed to increase rate of defect free extrusion. Other objects of the present invention are: to lower cost of the used additives, to lower amount of additives during extrusion of polymer melts with fillers, to simplify design of equipment, which is used for processing of polymeric materials, to save energy, which is necessary for processing, to improve product appearance and its mechanical performances.

### SUMMARY OF THE INVENTION

In accordance with the present invention a method for processing a thermoplastic polymeric material which comprises extrusion of molten thermoplastic polymeric material comprising additives of elastomers through a die-set, wherein an elastic layer substantially coats at least a portion of the die cavity inner wall during extrusion.

In a particular embodiment of the present invention said portion of the die cavity inner wall is adjacent to its exit and having length not less then 10% of the narrowed flow exit passage.

In a particular embodiment of the present invention said thermoplastic polymeric material comprising additives of elastomers in amount from 0.001 to 10 weight % based on the total weight of the composition.

In a particular embodiment of the present invention a method comprising following succeeding steps:
a. extrusion of molten thermoplastic polymeric material comprising additives of elastomers in amount from 0.01 to 10 weight % based on the total weight of the composition,
b. extrusion of another thermoplastic polymeric material comprising additives of elastomers in amount from 0 to 1 weight % based on the total weight of the composition.

In a particular embodiment of the present invention a method according to any claim from 1 to 4, wherein said elastomers are selected from uncured elastomers and they coat at least a portion of the die cavity inner wall and vulcanizing in situ.

In a particular embodiment of the present invention a method according to any claim from 1 to 4, wherein said elastomers are selected from thermoplastic elastomers.

In a particular embodiment of the present invention a method according to claim 6, wherein said thermoplastic elastomers having point of glass transition below temperature of processing but above melting temperature of thermoplastic polymeric material and low adhesion to said thermoplastic polymeric material.

In a particular embodiment of the present invention a method according to claim 5 comprising vulcanizing said uncured elastomers by the reaction of polycondensation or hydrosilation.

In a particular embodiment of the present invention said portion of the die cavity inner wall having a coating of catalyst to the appropriate reaction of vulcanizing.

In a particular embodiment of the present invention said catalyst coats said wall during extrusion of said thermoplastic polymeric material.

In a particular embodiment of the present invention a method comprising separate in time adding of components of uncured elastomers.

In a particular embodiment of the present invention a method comprising adding said catalyst to thermoplastic polymeric material and successive extrusion of another thermoplastic polymeric material.

In a particular embodiment of the present invention said thermoplastic polymeric material having cross-linking agents.

In a particular embodiment of the present invention said cross-linking agents are selected from organic peroxides with decomposition temperature above temperature of processing but below decomposition temperature of said thermoplastic polymeric material.

In a particular embodiment of the present invention vulcanizing of uncured elastomers conducted under such condition as heating at least a portion of the die cavity inner wall adjacent to the die exit till decomposition temperature of said peroxides.

In accordance with the present invention catalysts for appropriate reaction of vulcanization coats at least a portion of the die cavity inner wall.

In a particular embodiment of the present invention said catalysts impregnated into rubber coating elastic at processing temperature.

In accordance with the present invention a composition of thermoplastic polymeric material comprising polyolefins and elastomers, wherein said elastomers are selected from block copolymers comprising rigid polymers A with point of glass transition above room temperature but below processing temperature and soft polymers B with point of glass transition below room temperature, said block copolymers having structure of linear block copolymers A(BA)n, where n>0, or (BA)m where m>1 or of graft polymers having soft polymer with at least two grafted segments of rigid polymer and said thermoplastic polymeric material having additives of said elastomers in amount from 0.001 to 10 weight % based on the total weight of the composition.

In a particular embodiment of the present invention said rigid polymers are selected from a following group: polyethylsulphone, polyvinylpirrolidone, polymethylmetacrylate, polystyrene, rigid polyamide, polyurethane, and said soft polymers are selected from a following group: polymethylphenylsiloxane, polydimethylsiloxane, perfluorinated polyethylene, fluorinated polyethylene or soft copolymers of fluorinated polyolefins with the ratio of fluorine atoms to carbon atoms not less then 1:2.

### DETAILED DESRIPTION OF THE INVENTION

The term "thermoplastic polymeric material" or briefly "thermoplastic material" or "thermoplastics" means a material based on polymer, which is softening and getting an ability to be deformed plastically at heating below temperature of its thermal decomposition. The term "plastic deformation" means nonreversible deformation under multiple repeated or long lasting loads without rupture.

In a general case thermoplastic material comprises not only polymer itself but different additives: antioxidants, stabilizing agents, additives to diminish accumulation of static electricity, organic and inorganic fillers, dyes and colorants, softening agents, additives to prevent sticking of polymer products, e.g. antiblock agents for polymer film, polymer processing aids, oils, etc. Examples of polymers include but not restricted by a following list: polyolefins, fluorinated hydrocarbons, vinil- polymers, acryl and methylacryl polymers, polyacetates and their copolymers, polyethers, polyesters, polyamides, polycarbonates, polysulfonates, polyurethanes, thermoplastic ethers of cellulose. Especially, the present invention is aimed to be used in processing of polyolefins. Examples of polyolefins include but not restricted by polymers and copolymers of ethylene, propelene, butene, pentene, hexene, as well as copolymers of polyolefins with polar molecules, which include but not limited by vinil alcochol, acrilic acid and mixtures of the polymers. The advantageous materials for extrusion are polyolefins and their copolymers based on metallocene catalysts and having narrow molecular weight distribution. The present invention could be used with some restrictions to improve extrusion of blends of raw elastomers with peroxides, which cure in free-radical mechanism, or thermoplastic elastomers based on block copolymers, or in extrusion of blends of thermoplastic polymers with elastomers.

In accordance with proposed technical solutions, during processing of thermoplastic polymeric material an elastic coating is formed at the surface, which is in contact with molten polymeric material. To increase rate of defect free extrusion it would be enough to produce an elastic coating near the exit of forming apparatus with length of the coating not less then 10% of the gap for extrusion of thermoplastic material. Indeed, elastic stress in the flow of polymeric material is located near the exit of the processing apparatus and the use of already such length provides a noticeable increase in rate of defect free extrusion of thin wall tube or profile. If elastic coating is longer then the rate of defect free extrusion is rising further. If length of the elastic coating is less then 10% from the channel gap then there is no noticeable increment in the rate of defect free extrusion.

Coating at flight during extrusion, for example during extrusion through a die, could be done with the use of a modem die designed for multiplayer film extrusion w, which is having porous inserts to supply lubricant at the die surface contacting with molten polymeric material [28]. However, coating and recoating by deposition of additives from molten polymeric material at the surface contacting with the melt is preferable. Processing temperature of polymeric material has to be higher then corresponding melting point or point of glass transition for additives, i.e. at processing temperature the additives have to be soften and to form a layer of thermoplastic elastomer at the surface, or a layer of the blend of components of raw elastomers, or a layer of raw elastomers and curing agent. Interaction of the elastomers with surface and curing of components of the elastomers in this layer results in an elastic coating at the surface. The rate of deposition is growing proportionally to amount of additives in the polymeric material. The rate of wear is governed by slip velocity at the boundary, by presence of abrasive particles in polymeric material, by adhesion of the elastic coating to surface and by mechanical properties of the elastic material of the coating. Therefore, amount of additives is chosen to balance rate of deposition and rate of wear of the coating. The choice from range 0.001 to 10 weight % seems to be preferable.

If amount of additives is less then 0.001 weight % then deposition rate will be too slow and it will not compensate wear of the coating. The use of more then 10 weight % of additives is not reasonable because even at high rate of extrusion the deposition rate of coating will be higher then the rate of wear. That will diminish cross-area of the channel, what is not undesirable. So, preferably, amount of additives to balance wear and deposition is chosen from range 0.001 to 1 weight %.

Deposition of the elastic coating could be done in a relatively short term. The rest of time equipment could be used for extrusion of material with no additives or with low amount of additives. For example, for accelerated deposition of elastic coating it is possible to use blends with high amount of additives, i.e. up to 10 weight %, and then to use additives in amount not more then 1 weight % but preferably from 0.01 to 0.05 weight %.

In practical extrusion the additives are used in form of concentrated blends with polymeric material, while granules of this concentrated blend are dozed and mixed with granules of polymeric material inside an extruder. The use of the concentrated blends or master batches allows optimizing size of inclusions of additives in the polymeric material. Deposition of additives at surface of processing equipment is going in areas of sharp flow contraction. The size of inclusions has to be not too small (below 0.1 µm) because in this case deposition rate of additives at equipment walls is too slow. The size of inclusions has to be not too big (above 10 µm) because in this case inhomogeneous structure of the product is noticeable. For optimal size of inclusions (from 0.1 to 10 µm) an amount of additives in thermoplastic material has to be not less then 0.001 weight % and not above 10 weight %. Indeed, deposition efficiency of additives is growing with size of inclusions [29] and if amount of additives is below 0.001 weight % while size of the inclusions is optimal then deposed layer is going to be not even. Deposition of additives makes unpredictable change in cross section of channels and product profile at amount of additives above 10 weight %.

Deposition of an elastic coating could be done with the use of another type of polymeric material then for product. For example, cheap low-density polyethylene (LDPE) could be used for deposition of coating and then the coating could be used for manufacturing of film from more expensive polymeric material, e.g. metallocene polyethylene (mLLDPE or mPE).

The term "deposition of an elastic coating" means deposition of coating from material, which is elastic in comparison with thermoplastic polymeric material, at rigid surface or at a layer of another or the same elastic material, for example to repair worn-out coating or to enlarge thickness of already existing coating. Elastic properties are measured for specific time of process. The term "specific time of process" means time of load or pressure changes in the process. Specific time of periodical and quasi-periodical process is measured as a period of oscillations.

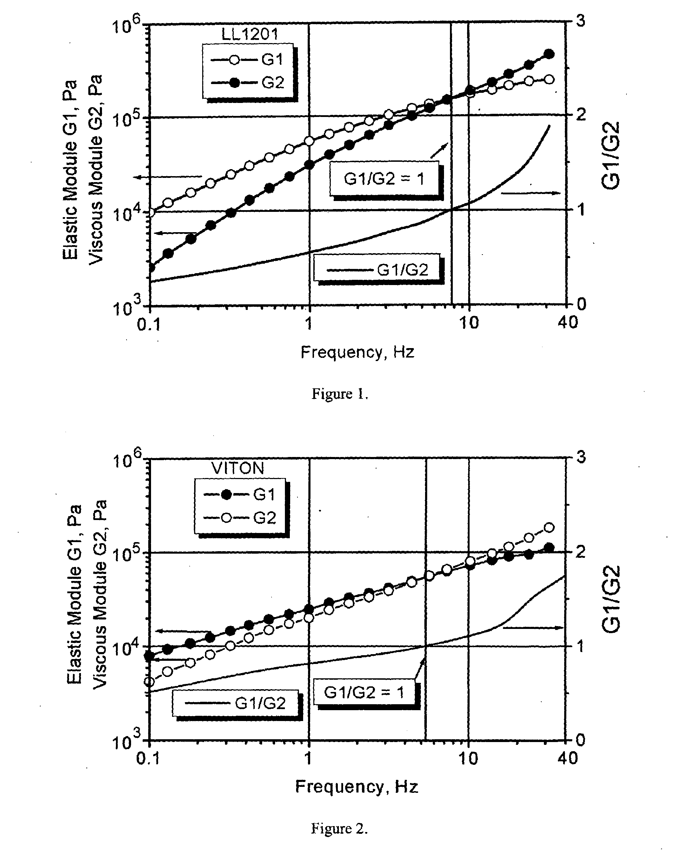

Polymeric material at temperature above point of glass transition shows up elastic properties for short processes and plastic properties for long processes. To measure ratio between plastic and elastic deformations the material has to be deformed periodically under sinusoidal load [30,31]. If F is a force applied to surface area S in the direction parallel to the surface then shear stress is σ = F/S. Then shear deformation is γ = γₒ•SIN(ωt). It is common to characterize shear stress inside the material with an elastic modulus G1 and a viscous modulus G2. Then σ = σₒ• (G1•SIN(ωt) + G2•COS(ωt). Plots of the elastic modulus G1 and the viscous modulus G2 vs. load frequency f = ω/2π are presented at Figure 1 for linear polyethylene LL1201 XV, which we have used in examples of realization of this proposal, for temperature 165°C. Mechanical properties of the polyethylene were measured with rheometer "Rheotest RT-20" from HAAKE-Thermo. The plots are crossed at frequency about 7 Hz. In the limit of low frequencies of load the viscous modulus is larger then the elastic modulus, i.e. the material shows up itself as liquid. In the limit of high frequencies the viscous modulus is larger then the elastic one and the material shows up itself as a solid body. The ratio of an elastic modulus to a viscous one (G1/G2) could be used as a criterion of elasticity.

It is shown below in example 1 that during extrusion of polyethylene at temperature 165°C surface defects appear at frequency about 20 Hz. A probable reason of the defects onset could be explained in a following way. It is known that after die exit a surface layer of polymeric material is under acceleration and stretching. Elastic energy could be released in periodical transitions "stick-slip", that is by step-like shifts of surface layer of material along die wall near its exit and in rupture (melt fracture) of surface layer by cracks. The ratio between an elastic modulus and a viscous modulus **(G1/G2)** for melt of polymeric material at apparent frequency of defects is equal to κ**.** It is obvious that **K** could very from one polymeric material to another and under temperature variations. For polyethylene LL1201 XV used in our examples **K≈1.4.** Let us take the value of **K** as a factor to describe elasticity of material. Material of coating has to be elastic in comparison with melt of polymer, that is the ratio of an elastic modulus to a viscous modulus has to be larger then corresponding value of polymer in K times at apparent frequency of defects. Let us consider the material of coating as elastic one in comparison with the melt of polymer if **(G1 /G2)|_{additives} > K•(G1 /G2)|_{polymer}= K².** Then at apparent frequency of defects elastic material of coating is characterized by relationship **(G1 /G2)|_{additives} > K².** It is possible to expect that in a complex mechanical system "polymer - elastic coating" some damping of oscillations will take place.

Additionally, to produce coating at surface it is necessary that in the limit of low frequencies the material of coating is elastic in comparison with the molten polymer. In terms of the elasticity factor it means that in the limit of low frequencies (long time) of load a following relation for the ratio of an elastic modulus to a viscous modulus for the elastic coating has to be valid: **(G1₀ /G2₀)**|**_{additives} > K•(G1₀ /G2₀)**|**_{polymer}= KL,** where **(G1₀** /**G2₀)**|**_{polymer}= L -** is the ratio of an elastic modulus to a viscous modulus in the limit of low frequencies. So, the material for elastic coating in qualitative criteria has to satisfy two following conditions:
**(G1/G2|_{additives} > K•(G1/G2|_{polymer}= K²**, where **K = (G1** /**G2)**|**_{polymer}** at aparent frequency of defekts,
**(G1_{additives}/(G2_{additives0} > K•(G1_{polymer}**/G2**_{polymer0}= KL**, where **L = (G1 _{polymer}**/**G2 _{polymer})₀** at low frequencies of load.

If for deposition of the coating such material is used, which have low adhesion to thermoplastic material, then melt of polymer slips along such surface. The slip of one material along another is a result of elastic deformations and periodical shifts along surface of contact in shear crack propagation. Slip velocity corresponds to sum of the shifts during a specified time unit. Slip of molten polymer diminishes stretching of surface layer of product at the die exit. However even in this case melt fracture could happen at high rate of extrusion if amplitude of shifts and maximum values of stress under stretching are above strength of the polymeric material. To enlarge rate of defect free extrusion it is necessary to diminish amplitude of shifts along boundary and to increase frequency of these shifts that is to diminish maximum values of load under stretching in the surface layer of product. The shear cracks propagate along boundary. Therefore thickness of coating is not so important as length of the elastic surface. Elastic coating do not loose its properties that is could be deformed in a reversible way even in a scale of thickness compatible with the length of elastomer molecule. Elastic deformation of so thin layer is extremely difficult to measure but nature of elastic properties has to be the same in this scale.

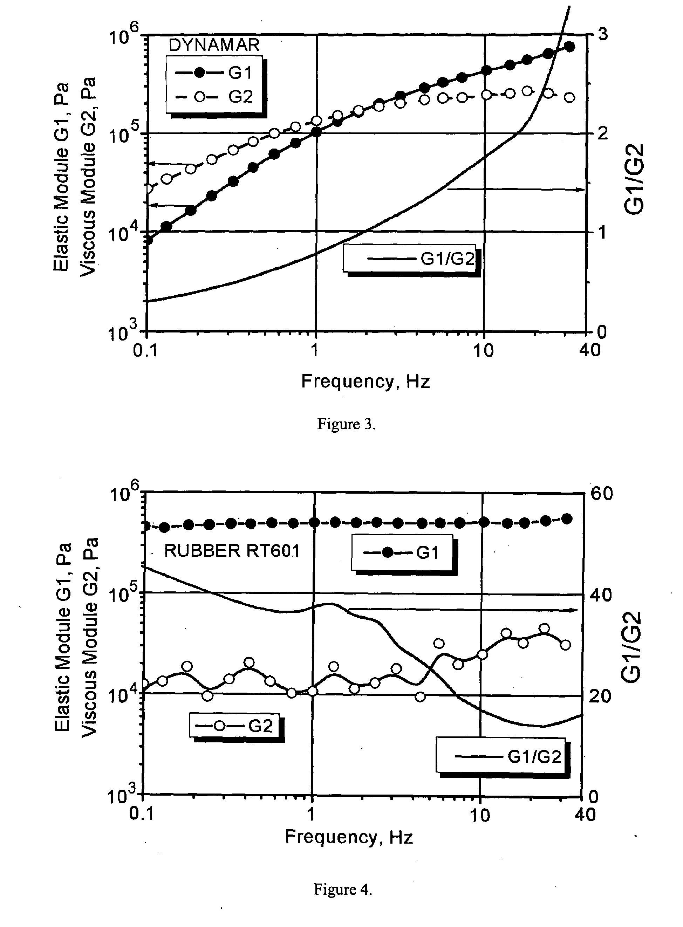

At Figure 2 plots of the elastic modulus **G1** and the viscous modulus **G2** vs. frequency **f** are presented for raw (not vulcanized) fluorinated elastomer "Viton® FreeFlow™ SC-PW", which we have used in Example 1 to increase rate of defect free extrusion. This material has low adhesion to molten polyethylene but an increase in rate of defect free extrusion is not so big if this material is used for coating because at apparent frequency of defects (20 Hz) the ratio of an elastic modulus to a viscous modulus **G1**/**G2** < **κ².** It is known that the use of additives of the not vulcanized fluorinated elastomer Dynamar to increase rate of defect free extrusion is more effective then the use of Viton additives [11]. At Figure 3 plots of an elastic modulus and a viscous modulus **G1, G2** vs. frequency for the not vulcanized fluorinated elastomer Dynamar are presented. As it is shown at Figure 3 the ratio of an elastic modulus to a viscous modulus at apparent frequency of defects for this material is larger then for Viton **G1**/**G2** > **κ²** but another condition **(G1**/**G2)₀** > **κL** is not fulfilled.

Surprisingly, we have discovered that if both conditions **G1**/**G2** > **κ²** 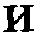 **(G1**/**G2)₀** > **κL** are valid for the coating material then rate of defect free extrusion is noticeably increased in comparison with known technical solutions.

The term "rubber" and "elastic material" are synonyms in technical literature. However, practically "rubber" ("elastomer") is a name not only for such material, which have already elastic properties, but also for that one, which could get elastic properties as a result of chemical and/or heat treatment. Therefore it is necessary to distinguish between raw rubber (latex, raw elastomer), which has no bonds between molecules and which is a plastic material, and rubber, which has bonds between molecules. The bonds could be covalent bonds, hydrogen, ionic and physical bonds. Covalent bonds join atoms, which have common electrons. Vulcanized elastomer with covalent bonds between molecules is not melting under heating while its elastic properties change. It could be considered as one molecule of very large molecular weight and complex three-dimensional structure. Vulcanized elastomer is produced by chemical and heat treatment of raw elastomer. For example, raw elastomer is mixed with cross-linking agent and catalysts of vulcanization and heated afterwards.

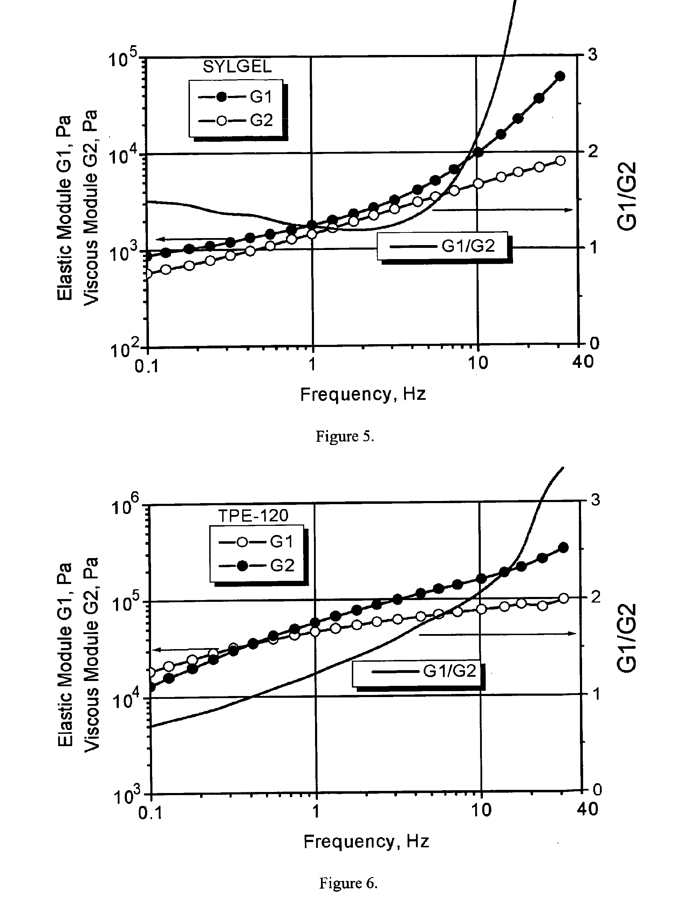

The used terminology is tangled by the fact that practically a "vulcanized elastomer" or "rubber" is a name not only for the elastomer itself but for blend of the elastomer with fillers, antioxidants, oils, etc. Therefore the term "vulcanized elastomer" corresponds to "rubber" while it is considered that the rubber has complex composition. At Figure 4 and Figure 5 plots of an elastic modulus and a viscous modulus vs. frequency for vulcanized silicone eastomers are presented. As it is shown in these Figures, **G1/G2> K²** and **(G1/G2)₀** > **κL** for these vulcanized elastomers. Therefore vulcanized elastomers could be efficiently used as a material for elastic coating and this is demonstrated in examples of the proposed technical solution.

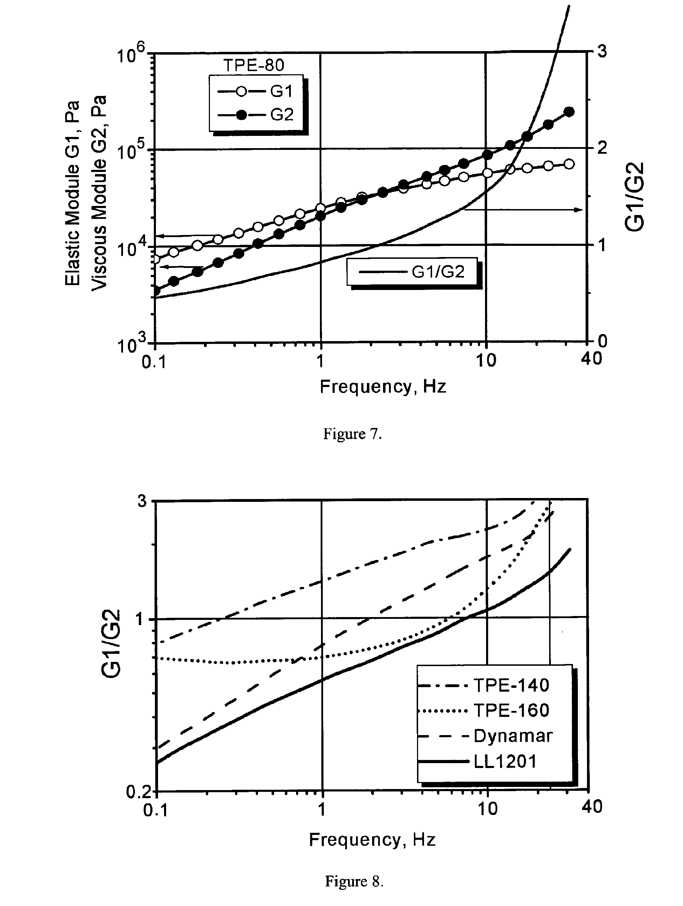

Elastomer with polymer chains joined by bonds which are weaker then covalent bonds is softening under heating and known as thermoplastic elastomer. At Figure 6 and Figure 7 plots of elastic modulus and viscous modulus vs. frequency are presented for TPE-120 and TPE-80 from a company Wacker Chemie at temperature 165°C. These elastomers are softening at temperature below processing temperature. It is shown at the Figures that for these elastomers both conditions **G1/G2> κ²** 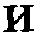 **(G1**/**G2)₀** > **κL** are valid, i.e. they could be used for deposition of elastic coating. At Figure 8 plots of the ratios of an elastic modulus to a viscous modulus are presented for polyethylene and a few elastomers. Equipment for processing of thermoplastic polymeric materials mostly is made of metals, for example dies, die screens, pipes, extruder bodies and screws. As a rule the used metals include instrumental and doped steel, stainless steel, bronze, cupper, nickel. Additionally metal surface could have coatings to diminish abrasion wear and corrosion, for example galvanic coatings from chromium, platinum and rhodium.

Molecules of an elastic coating could be attached to the surface by covalent, hydrogen and ionic forces. If the molecules deposited to the surface are joined with the surface only by weak forces of intermolecular interaction (Van der Waals forces), then it is impossible to speak about coating but only about a flowing layer of lubricant at the surface, because the molecules flow along the surface, which is in contact with melt of polymeric material. That is, the material deforms plastically and flows along the surface. Molecules of thermoplastic elastomers are connected to the surface by strong hydrogen or ionic bonds. In the limit of thin layers thermoplastic elastomer produces an elastic coating, which is similar to a thin layer of vulcanized rubber. Therefore these elastomers could be used efficiently as an elastic material, what is demonstrated in examples of this technical solution.

Thermoplastic elastomers, which are getting an ability of plastic deformation at heating, are subdivided to two classes: block copolymers (with hydrogen or physical bonds between molecules) and ionomers.

A hydrogen bond is an attraction of a hydrogen atom, which is joined with an electronegative atom in one molecule toward another electronegative atom in another molecule. Ionic bonds appear because of attraction of polar ion groups of different molecules. Physical bonds are those bonds, which appear between molecules because of separation of molecular segments in volume.

Monomers of two types are mixed without order or alternate in a simple copolymer. In a block copolymer monomers of the same type are connected in a long chain while chains of two or more monomers are joined. Copolymers could show up different properties for the same chemical composition but different arrangement of monomers. Block copolymers with two blocks are used as surface-active substances to produce suspensions and emulsions. Block copolymers with three or more blocks are mostly used as thermoplastic elastomers (TPE, thermoplastic rubbers). They have rigid segments with point of glass transition above room temperature and soft segments with point of glass transition substantially below room temperature.

Therefore block copolymers are characterized by two points of glass transition. In such systems rigid segments are grouped together and form individual micro phases in matrix of soft segments similar to micelles in emulsions. Grouping of rigid segments together works like physical bonding for soft segments and provides elasticity of the material. At high temperatures micro phases of rigid segments are softening what makes possible to process thermoplastic elastomer as ordinary thermoplastics. Slightly above point of glass transition the rigid segments stay together because of incompatibility with the soft segments. This separation increases the ratio of an elastic modulus to a viscous modulus for TPE in comparison with other types of polymers. At further elevation of temperature the micelles disintegrate. Block copolymer with number of blocks more then two could have linear structure or structure of graft polymer, when rigid segments are grafted to a soft polymer. Following examples of three block copolymers are well known:
- TPE - S - block copolymers based on styrene, i.e. styrene-butadiene-styrene (SBS), styrene-isoprene-styrene (SIS) and styrene-ethylene-butadiene-styrene (SEBS),
- TPE-E- block copolymers of rigid and soft polyesters and polyethers.
- TPE-A- block copolymers of rigid polyamide and soft polyatomic alcohol (polyol).

Thermoplastic elastomers with structure of linear three block copolymers are commercially available under dozens of trademarks, for example: VECTOR® [32], Styroflex® [33], KRATON® [34], Evoprene® [35], etc.

Polyurethane block copolymers also consist of soft segments with low point of glass transition and rigid segments, which have point of glass transition much above room temperature. Soft segments are generally polyether or polyester with molecular weight from 500 to 5000 atomic mass units (a.m.u.). Rigid segments generally include aromatic or aliphatic diisocyanate joined with low molecular weight diol or diamine. Combination of these soft and rigid segments forms block copolymer of the type (AB)ₙ, where n>1. Majority of polymers are not compatible thermodynamically and separate in volume. Polyurethanes show up two phase space structure because of chemical incompatibility between soft and rigid segments. In polyurethanes rigid segments group in semi-crystalline domains while soft segments form an amorphous matrix around. Grouping of rigid segments into micro phases provides physical bonding between molecules. Apart of the physical bond between molecules the polyurethanes have strong hydrogen bonds. Properties of polyurethanes and chemical structure of them is disclosed in technical literature [36,37].

In contrast to known applications of block copolymers as additives to produce impact tough compositions, for example impact tough polystyrene, in a present technical proposal it is preferable that both rigid and soft segments have low adhesion to polymeric material. Among soft segments of block copolymers siloxanes and fluorinated hydrocarbons have low adhesion to polyolefins. Siloxanes have two or more atoms of silicone joined by means of one or several oxygen atoms. Commercially available and less costly are the polysiloxanes with structure of polydimethylsiloxane, polydiphenylsiloxane, polymethylphenylsiloxanes, for example a product with trade mark SILRES® from company Wacker [38]. Polymethylphenylsiloxane and polydimethylsiloxane have very a flexible (soft) molecular chain because the bonds between neighboring atoms of oxygen and silicon could change angle between them like scissors. These polymers are characterized by very low glass transition points (-86°C 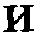 -123°C, correspondingly). Polydiphenylsiloxane similar to polystyrene has rigid structure of chain, point of glass transition above room temperature and could provide physical bond between polymer chains. Thermoplastic rubbers based on block copolymer with structure ABA, where A is polydiphenylsiloxane, B - polydimethylsiloxane, could be produced similar to [39] in a reaction of kinetic polymerization. Block copolymer based on polysiloxanes with structure ABA and (AB)ₙ, where n > 1, are mentioned in [40]. Thermoplastic elastomers based on polydimethylsiloxane and rigid organic segments with structure like ABA and (AB)ₙ, where A - polystyrene, B - polydimethylsiloxane, n>1, are known and first were investigated in [41,42] in the beginning of 80-s. Numerous examples of thermoplastic block copolymers based on siloxanes, styrene and its derivates are presented in patents [43-45]. Morphology and mechanical properties of block copolymers of polydimethylsiloxanes with polyurethanes or urea were investigated in [46]. Structure and properties of block copolymers of siloxanes and polyurethanes are presented in patents [47-49]. Morphology of some other block copolymers based on polydimethylsiloxane is investigated in [50]. It was shown that in volume of these thermoplastic polymers micro phase separation takes place, what provides elastic properties of these materials. Thermoplastic elastomers based on these block copolymers have much better mechanical properties in comparison with normal silicon rubbers. [51,52].

The use of thermoplastic elastomers with structure of block copolymers based on rigid polymers (A) and soft polymers (B), where rigid polymers are characterized by point of glass transition above room temperature but below processing temperature, allows to deposit an elastic coating by deposition of additives because at processing temperature the elastomers are able to deform plastically. The use of soft segments in the block copolymers with point of glass transition below room temperature improves elastic properties of the coating. The use of linear block copolymers A(BA)ₙ, where n>0, or (BA)ₘ, where m>1, or graft copolymers, when to a soft segment at least two side segments of rigid polymers are grafted, improves elastic properties of coating and increases the rate of defect free extrusion.

Preferably, it is recommended to use thermoplastic elastomers with point of glass transition above melting point of polymeric material because the ratio of an elastic modulus to a viscous modulus is growing when difference between point of glass transition of the additives and processing temperature is diminished. The ratio of an elastic modulus to a viscous modulus is growing also in the case when polymers with point of glass transition much less then room temperature are taken as soft segments.

Points of glass transition of some polymers are presented in Table 1 for comparison.

The use for rigid segments of following polymers: polyetherculphon, polyvynilsulphon, polymethylmetacrilate, polystyrene, rigid polyamide and polyurethane allows to enhance adhesion to metals and elastic properties of coatings, that is to diminish wear of the coating and to increase the rate of defect free extrusion. The use for soft segments of polymers from a following group: plydimethylsiloxane, polymethylphenylsiloxane, fluorinated polyethylene, soft copolymers of fluorinated polyolefin with ratio of fluorine atoms to carbon atoms not less then 1:2, allows to diminish adhesion of the elastic coating to molten polyolefins, that is to increase rate of defect extrusion.

Many sorts of rubber with covalent bonds and vulcanized elastomers lose their elastic properties under heating get sticky and decompose at temperature 180 - 200°C, which is common in processing of polymers by extrusion. Two groups could be selected among vulcanized elastomers (rubbers), which remain elastic at processing temperature of thermoplastic polymeric materials, as the most stable to heating and elastic at processing temperature of polymeric materials:
- Fluorinated rubber, i.e. rubber produced by vulcanization of fluorinated elastomers with molecular weight no less then 10,000 with ratio of number of fluorine atoms to carbon atoms not less then 1:2. In particular, the rubber, which is produced by vulcanization of perfluorinated elastomers.
- Silicone rubber, that is rubber produced by vulcanization of silicone elastomers, in particular, fluorinated rubber, that is rubber, which is produced by vulcanization of fluorinated silicone elastomers with ratio of fluorine atoms to carbon atoms no less then 1:2.

The term vulcanization of rubber could be determined as a reaction, in which material gets ability of reversible deformation under multiple load as a result of covalent bonding between molecules. There are three main mechanisms of vulcanization of silicone elastomers, fluorinated elastomers, modified by silanes, and copolymers of fluorinated polymers with silanes:
- Free radical mechanism,
- Poly-condensation,
- Hydrosilation.

Vulcanization of fluorinated elastomers and polysiloxanes could go due to a free radical mechanism under heating in presence of cross linking agents, for example due to thermal decomposition of organic peroxides (cross-linking agents). There are peroxides, which are specific to vinyl group and not specific ones. The peroxides specific to vinyl group vulcanize the elastomers, which have vinyl groups. Optimal ratio between amount of raw elastomers and peroxides is known from technical literature. Peroxides could polymerize not only elastomers but also thermoplastic material, what is a big drawback of them.

Peroxides are widely used to modify polyolefins by organo-functional silanes, for example by vinyl three-methoxy-silane or vinyl three-ethoxy-silane. Bonding of organofunctional silanes with easy hydrolyzable groups to polymer molecules, for example molecules of fluorinated elastomers or to siloxane molecules, allows to vulcanize raw elastomer in reaction of poly-condensation, that is in presence of water vapors. Chemical composition of peroxides and silanes, which are used in industry, is well known from literature [53].

Compositions based on siloxanes, which are modified by silanes, or copolymers of siloxanes and organo-functional silanes are widely used in adhesives, which are getting vulcanized under action of water vapors in air at room temperature. To prevent vulcanization during storage in presence of water vapors, there are easy hydrolysable organo-functional silanes in such compositions with boiling temperature in range 120 - 160°C, for example threemethoxysilanpropane. Such additives react with water coming to the cartridge and prevent vulcanization of polymer molecules. In open air the volatile silanes evaporate from the composition and the polymers are getting vulcanized. Byproducts of the cross linking are volatile chemical substances like alcohols, acetic acid and amines.

Vulcanization of fluorinated elastomers modified by organo-functional silanes, copolymers of fluorinated elastomers and organo-functional silanes, siloxanes modified by organo-functional silanes, and copolymers of silanes and organo-functional silanes could go in presence of water vapors and of catalyst. Such elastomers could be used as one component additive. Vulcanization of the blend of easy hydrolysable silanes and fluorinated elastomers with hydroxyl groups or polysiloxanes with hydroxyl groups also could go in a reaction of polycondensation, that is in presence of water vapors. Blends of such elastomers with silanes could be used as two component additives.

Rubber as well as majority of polymeric materials is permitable for water vapors. Therefore, in conditions of supply of water vapors to the exit of processing equimpent, for example to the die exit, vulcanization of the raw elastomers or of the blend of elastomers with silanes, which are able to be polymerised in presence of water in reaction of polycondensation, could go not only at the die exit but at some distance from its exit. If special precoursions are not taken to dry air, which is coming to the exit of the processing equipment, then water vapors, which are normally present in air, vulcanize the coating near exit of the processing equipment. The length of vlucanised rubber near the exit depends on difusion rate of vapors in rubber and increasese in time. It takes more then 2 hours for water vapors to diffuse inside rubber to the depth 2 mm. The thikness of the resulting coating will be not even, that is with an increase of the coating thikness to the direction of the exit from processing equipment, for example die exit. If not to take special precousions to remove water, which is dissolved in polymeric material, then vulcanization could go also inside an extruder. Content of water in such not polar polymers like polyolefins is about 30 - 60 ppm, while for copolymers with polar groups like ethylvinilacetate it is in range 300 - 400 ppm.

Rate of reaction of polycondensation is remarkable growing in presence of catalysts. For reaction of polycondensation following catalysts are know, which are based tin (Sn), titan (Ti), lead (Pb), cobalt (Co), cadmium (Cd), calcium (Ca), zirconium (Zr), but not limited by this group.

Another method of vulcanization of silicone elastomers, fluorinated elastomers and fluorinated silicone elastomers, having vinyl groups is hydrosilation that is the reaction with siloxanes, having groups Si-H. The ratio between silanes, having Si-H groups and polymers, having vinyl groups, could be in a wide range from 1:1 to 1:100. Hydride and vinyl groups could be parts of the same polymer chain of siloxane elastomer or fluorinated silicone elastomer. Reaction is remarkably accelerated at high temperature and in presence of catalyst (platinum or rhodium complex but there are other catalysts based on metals of platinum group).

It was shown in patent [54] that pure metal of platinum has some catalytic activity, for example platinum deposited at coal and fine particles of aluminum oxide. It was shown in [55] that some catalytic activity has also platinum oxide. So, producing of the surface for contact with polymer melt, which doped by metals, alloys or/and compounds, which contain metals of platinum group: platinum (Pt), palladium (Pd), rhodium (Rh), ruthenium (Ru), osmium (Os), provides vulcanization of silicone rubber at the surface in a reaction of hydrosilation. Galvanic coating based on platinum, palladium and rhodium gives hard and wear resistant surface with good adhesion of siloxanes to the surface.

There is an option that one sort of an elastic coating is deposited at an elastic coating from another rubber. In particular, fluorinated silicone rubber could be deposited at the surface of silicone rubber or of fluorinated rubber based on hydrocarbons. It is known that the sorts of silicone rubber, which could be vulcanized by action of water vapors, have good adhesion to metals and metal oxides and could be used to enhance adhesion of the surface to other sorts of silicon rubber. Fluorinated elastomers, for example fluorinated silicones, which can be vulcanized in presence of water vapors, could be deposited at the surface of such silicone rubber. The use of such multiplayer elastic coating could diminish abrasion wear. In the next example, deposition of thermoplastic silicone rubber is going at the surface of vulcanized silicone rubber. In the next example, first an elastic layer from silicone rubber is deposited to the surface, which has fillers chosen from compositions or powder of metals or alloys of metals from platinum group at the surface. Such layer of silicone rubber could be done by deposition of additives, which can be vulcanized in a reaction of poly-condensation. Then vulcanization of other silicones, which can be vulcanized in a reaction of hydrosilation, could go at the surface of such rubber. The layer of silicone rubber with catalysts could be deposited during processing of thermoplastic material or the die or other processing equipment with such coating at the surface for contact with molten polymeric material, could be manufactured specially.

Deposition and vulcanization of rubber could go in a way of separate supply of elastomer components, for example, first, silicones, which have unsaturated chemical bonds (C=C), and the catalyst of the reaction are used as additives in polymeric material, and then silicones, which have bonds silicon-hydrogen (Si-H). Or vice versa, first, silicones, which have bonds silicone-hydrogen (Si-H), with the catalyst are used as additives and then the silicones, which have unsaturated bonds carbon-carbon (C=C). It is possible to produce coating by alternating of the additives in an extrusion process. The deposition layer-by-layer and mixing of elastomer components is going at the die surface. Reacting components of elastomers could be separately blended with polymeric material and prepared in a form of granules for storage and dozing. In this case the use of the granules with different components could be separated in time so, that mixing and vulcanization of elastomers will go only at the surface of processing equipment, which is in contact with melt of polymeric material.

Deposition of elastic coatings at metal surface, which isolate metal from contact with melt of polymeric material, provides numerous technical advantages, in particular: an increase of rate of defect free extrusion, a drop in extrusion pressure, a drop in power consumption for processing, less processing temperature, less thermal decomposition of polymeric material in dead cones, an improvement of the product appearance, less abrasion wear of metal, less corrosion of metal from contact with polymer melt and with liquids for cooling and treatment of the product.

In summarizing analysis of the present invention it is possible to note, that an elastic coating is deposited at surface, which is in contact with melt of polymeric material, preferably by deposition of elastomers from the melt of polymeric material. The following elastomers are worthwhile to use as additives:
- Thermoplastic elastomers, which are getting soft but reserve elastic properties at processing temperature. Such elastomers provide deposition of elastic coatings at the surface, which is in contact with the melt. The use of thermoplastic elastomers is the simplest method of elastic coating deposition.
- Elastomers, which are cured in a reaction of hydrosilation or polycondensation.

Two component blends could be used as additives in a condition of simultaneous or separate supply of the components. Catalysts could be used as additives or the catalysts could be deposited at the surfaces, which are in contact with the melt. In a condition of the use of organic peroxides as cross-linking agents an elastic coating could be produced by heating of the die wall for example near die exit [56] above temperature of decomposition of the peroxides but less then temperature of decomposition of thermoplastic polymeric material. The sense of the proposed invention is clarified by examples and by graphic materials. At Figure 1 plots of an elastic modulus and a viscous modulus vs. frequency of deformations at temperature 165°C for the used polyethylene are presented. At Figure 2 plots of an elastic modulus and a viscous modulus vs. frequency of deformations at temperature 165°C for fluorinated polymer VITON are presented. At Figure 3 an elastic modulus and a viscous modulus vs. frequency of deformations at temperature 165°C for fluorinated polymer DYNAMAR are presented. At Figure 4 an elastic modulus and a viscous modulus vs. frequency of deformations at temperature 165°C for silicone rubber RT-601 are presented. At Figure 5 an elastic modulus and a viscous modulus vs. frequency of deformations at temperature 165°C for silicone rubber SilGel 612 are presented. At Figure 6 an elastic modulus and a viscous modulus vs. frequency of deformations at temperature 165°C for thermoplastic elastomer TPE-120 are presented. At Figure 7 an elastic modulus and a viscous modulus vs. frequency of deformations at temperature 165°C for thermoplastic elastomer TPE-80 are presented. At Figure 8 plots of the ratio of an elastic modulus and a viscous modulus vs. frequency of deformations at temperature 165°C for thermoplastic elastomers TPE-140, TPE-160, non-vulcanized elastomer Dynamar and polyethylene LL1201 are presented. At Figure 9 a sketch of an apparatus for extrusion with the use of metal or glass die for extrusion of a round rod is presented. At Figure 10 a sketch of a die for extrusion of thin wall tube is presented. At Figure 11 a flow curve of pressure vs. extrusion velocity is presented by a solid line for the die made of stainless steel with no coating. A curve of apparent frequency of defects at the product surface vs. extrusion velocity is presented by a dotted line. At Figure 12 flow curves for extrusion of polyethylene through a die made of stainless steel with no coating is presented by a solid line, through the die with thin coating by nonvulcanized elastomer VITON (0.3 µm) is presented by a dashed line, through the die with thin coating by nonvulcanized elastomer Dynamar (0.3 µm) is presented by a dotted line, through the die with thin layer of thermoplastic elastomer TPE-160 (0.09 µm) is presented by a dash-dotted line. Crosses mark onsets of surface defects.

The present invention is directed to the use in processing of thermoplastic polymeric materials.

### EXAMPLES

### Example 1

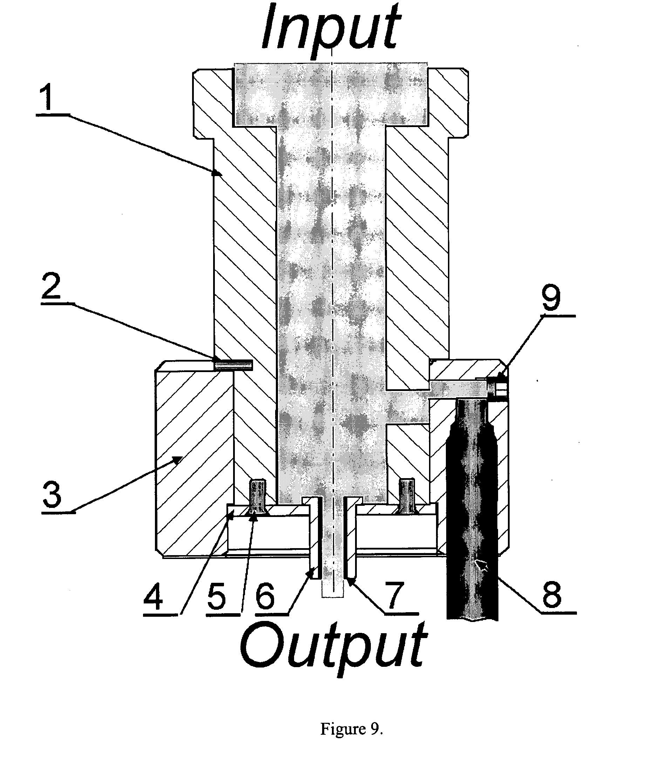

A method was realized with the use of equipment for extrusion of thermoplastic polymeric material, which includes an apparatus or a die for extrusion of polyethylene and presented schematically at Figure 9. The apparatus consists of a bearing body 1 with accessories to attach it to the extruder, an assembling pin 2, an iron ring 3 fixed at the bearing body 1, a ring plate 4 to bear the die, screws 5 to fasten the ring plate and the iron ring to the bearing body, a tubular die 6 for extrusion of rods. A coating 7 at inner side of the die could be from metal oxides to enhance adhesion of elastomers to metal or coating by the elastomers. The equipment includes a pressure transducer 8 and a closing screw 9.

In realization of the method the apparatus works a following way. The material to process was loaded in a feeder of the processing equipment including a ram extruder, which is not shown at the Figure, as it does not relate to the core of the proposal, and extruded through a die 6. In the case of catalytic coating it interacts with elastomers, promotes their vulcanization and deposition in the area of the coating. In the case of an elastic coating produced by other methods, this coating interacts with the material and provides deposition of a coating from additives to compensate wear of the elastic coating.

The used polyethylene LL1201 XV from a company ExxonMobil [57] is characterized by following parameters: density - 0.926 g per cm³, melting point - 123°C, Melt Index - 0.7 per 10 min, recommended temperature for extrusion - from 180 to 200°C. A ram extruder from a company Loomis [58] was used with a barrel 60 mm in diameter, length - 200 mm and maximum pressure in the barrel 400 bar. Dies with diameter of cylindrical channel for melt flow - 6 mm, length - 32 mm and 48 mm. In extrusion of polyethylene through the die from stainless steel 48 mm in length with a ramp of extrusion rate from 2 to 300 mm per sec the product had a rough surface when extrusion rate was above some critical value. The critical rate of the defects onset for polyethylene with no additives at temperature 165°C was 5.4 mm per sec. At Figure 11 a solid line represents a plot of pressure vs. extrusion velocity. Apparent frequencies of surface relief of the product in [Hz], that is the ratio of extrusion velocity in [mm per sec] to period of the periodical relief in [mm] were measured and presented as a dashed curve. The apparent frequencies are in range from 13 Hz to 40 Hz and an averaged value is about 20 Hz. The ratio of an elastic modulus to a viscous modulus for melt of polyethylene at frequency 20 Hz is **K** ≈ 1,4.

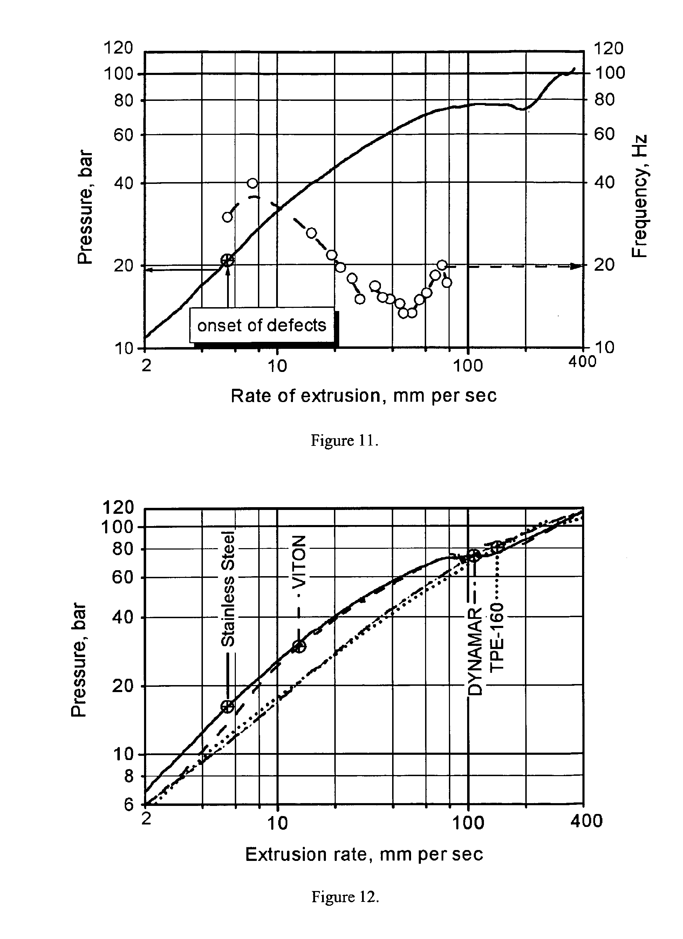

Then we used a die from stainless steel 32 mm in length with a thin layer of fluorinated elastomers of trademarks "Viton® FreeFlow™ SC-PW", "DYNAMAR" Dyneon (3M) and thermoplastic elastomers based on siloxanes. To coat inner side of the die by elastomers the die was disconnected from the extruder and filled by molten elastomers. Then the die was attached to the extruder, heated to the temperature of extrusion and extrusion of molten polyethylene was done at rate 2 mm per sec during 30 min. In a result the elastomer was pressed out by molten polyethylene so that at the die wall a thin layer of elastomers was yet present. Then extrusion was done with the ramp of velocity from 2 to 400 mm per sec. At Figure 12 plots of pressure drop at the die vs. extrusion rate (flow curves) are presented for the die with no coating by a solid line, for the die with coating by elastomer Viton by a dotted line, for the die with coating by elasotmer Dynamar by a dot-dashed line and for the die with coating by thermoplastic elastomer TPE-160 by a dotted line. Crosses mark onsets of defects at the product surface. It is shown that the highest rate of extrusion is observed when thermoplastic elastomer TPE-160 has been used.

About 0.4 kg of polyethylene was used to measure a flow curve. After an experiment the die was dismounted and thickness of coating at metal surface was evaluated by measuring of electrical capacity.

To evaluate abrasion resistance extrusion was done through the same die second time. In the second experiment it was measured that the maximum rate of defect free extrusion have been changed from 142 to 105 mm per sec while thickness of the coating have been changed from 0.09 to 0.07 µm in the case of the thermoplastic elastomer TPE-160. For the use of nonvulcanized elastomer Dynamar maximum rate of defect free extrusion has been changed from 107 to 79 mm per sec while thickness of the coating has been changed from 0.3 to 0.07 µm. Dynamic viscosity of thermoplastic elastomer TPE-160 is much less in comparison with fluorinated elastomer Dynamar. Wear resistance of TPE-160 is a prove that we could speak about a thin coating from this material at the inner surface of the die. So, in the case of TPE-160 properties of the material satisfy to both conditions **G1**/**G2> κ²** and **(G1**/**G2)₀** > **κL,** and we could speak about deposition of a thin elastic coating. Meanwhile in the case of Dynamar properties of the material do not satisfy a condition **(G1/G2)₀** > **κL,** and we could speak only about a layer of lubricant at the inner die surface. Other thermoplastic elastomers (TPE-80, TPE-120, TPE-140) have properties of the material, which satisfy to both conditions mentioned above, also have demonstrated good abrasion resistance and high rate of defect free extrusion.

Thickness of coatings after extrusion, onset of defects for the use of a steel die with no coating and with coatings, dynamic viscosity at specific frequency 20 Hz and the ratios of an elastic modulus to a viscous modulus at the specific frequency 20 Hz and at the frequency 0.08 Hz are summarized in Table 2 for comparison. Two bottom lines in the Table are marked by ** and have data measured after two successive extrusions. The presented values of dynamic viscosity correspond to **G2/ω,** [Pa•s], ω= 2π**f** for frequency **f** = 20 Γ 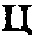 .

### Example 2

Method has been realized with the use of apparatus, which is presented schematically at Figure 9 and comprising a glass die 32 mm in length and 6 mm in diameter. Extrusion was done with no additives at temperature 165°C and with the ramp of velocity. For the clean glass tube an onset of defects was at 6.7 mm per sec. Then the die have been coated by a layer of elastomers, the same way as it is described above in Example 1. Fluorinated elastomers with tradename "Viton® FreeFlow" from company DuPont and thermoplastic elastomers "TPE-120" from company Wacker Chemie GmbH have been used.

For fluorinated elastomer Viton the onset of defects was detected at 17.8 mm per sec. After extrusion of 1 kg of polyethylene the onset of defects was detected at velocity 10 mm per sec. After extrusion of 2 kg of polyethylene the onset of defects was practically at the same velocity as for a clean glass tube. For thermoplastic elastomer TPE-120 the onset of defects was at 110 mm per sec. Polyethylene was blended with master batch having titanium oxide so, that amount of abrasion particles was 4 weight %. After extrusion of 1 kg of polyethylene with abrasive additives and 6 kg of polyethylene with no additives the onset of defects was at 65.3 mm per sec. So, wear resistance of coating from thermoplastic elastomer TPE-120 is much higher in comparison with fluorinated elastomer Viton.

### Example 3

Method has been realized with the use of apparatus, which is schematically presented at Figure 9 and comprising a glass die with no coating. Granules of polyethylene were mixed in the barrel of an extruder with liquid silicone elastomer. Silicone rubber with a trade-name "ElastoSil N10" from company Wacker Chemie [59] was taken as the one component silicone elastomer. Amount of additives in polyethylene was 5 weight %. Polymeric material has been heated till 180°C and extrusion of 0.4 kg of the polyethylene LL1201 XV with additives of the silicone compound has been done through a die at everaged product velocity 5 mm per sec. Then the barrel was filled by granules of polyethylene without additives, heated till melting of PE and even distribution of temperature. The die exit was blown on by air at temperature about 200°C. Extrusion has been done after 8 hours with ramp of extrusion rate from 2 to 300 mm per sec to detect an onset of defects at product surface. The defects appeared at extrusion rate 150 mm per sec. Extrusion of 2 kg of polyethylene without additives was done and no change in the onset of defects was detected in the successive experiments.

The used die and a barrel of extruder were cleaned mechanically and by heating. The die was heated in an oven at temperature about 500°C. Then granules of polyethylene have been mixed with silicone elastomer in amount of additives about 10-12 weight %. After extrusion of 0.4 kg of the mixture the barrel was filled by pure polyethylene and extrusion of the molten polyethylene has been done after 8 hours. In extrusion the product bent aside of axis what proves that thickness of the elastic coating was not even. Obviously, the use of additives in amount above 10 weight % is not desirable because of uncontrolled change of the die channel cross section.

### Example 4

Method has been realized with the use of the apparatus, which is presented schematically at Figure 9 and comprising a brass die with platinum coating. Granules of polyethylene mixed with raw elastomer based on graft copolymers of siloxanes and polyurethanes from Company Syrel [60] with no additives of catalyst were loaded in the barrel. The used elastomer has good adhesion to metal surface and cure in reaction of hydrosilation in presence of metals of platinum group. The amount of additives of the polyurethane-silicone copolymer in polyethylene was about 1 weight %. Polymeric material in amount of 0.4 kg has been heated to 180°C and extruded through a die with mean product velocity 5 mm per sec. Then the barrel was loaded by granules of polyethylene without additives, heated till melting of PE and even distribution of temperature in the barrel. Extrusion has been done with a ramp of velocity at temperature 165°C. It has been detected that onset of defects at the product surface was at velocity about 120 mm per sec. Extrusion of 2 kg of pure polyethylene has been done and no change in the onset of defects was detected.

### Example 5

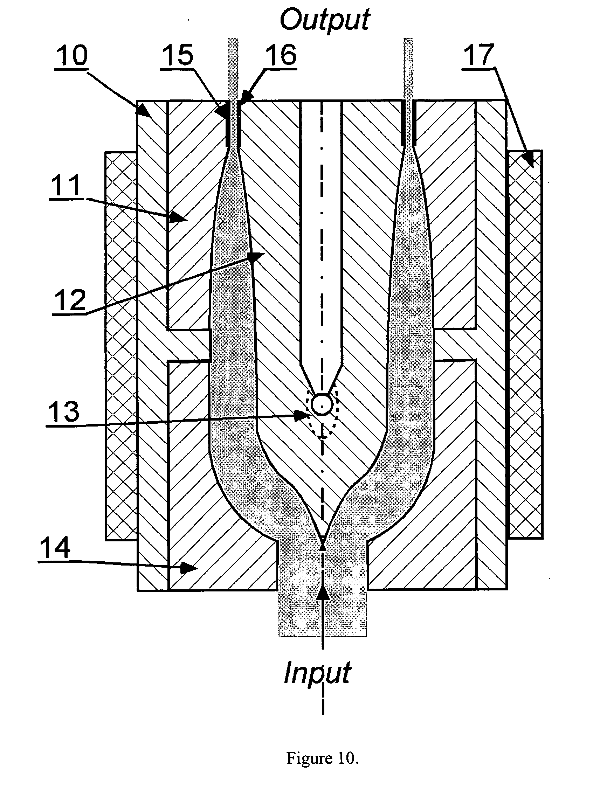

Method has been realized with the use of an apparatus, which is schematically presented at Figure 10 comprising an extrusion die and a screw extruder. The apparatus consists of a bearing body 10 with upper ring 11 and a core 12, fixed at the die axis by three rods 13. The bottom ring has a threaded hole to fix the die to a screw extruder. There are a coating 15 at the upper ring 11 and a coating 16 at the core 12. The coatings could be catalytic coatings or coatings from metal oxides or elastic coatings. In particular, an elastic coating could be produced with additives of catalyst for reaction of elastomer vulcanizing. The apparatus has heaters 17.

In realization of the method the apparatus works a following way. The material to process has to be loaded in a feeder and extruded at some determined velocity through the die. In the case of a catalytic coating it interacts with additives of elastomers and promotes deposition of an elastic coating at the area of the catalyst and its vulcanization. In the case of an elastic coating, which is produced by other methods, this coating interacts with material and promotes deposition of additives from the material to compensate wear.

The gap between upper ring and a core is 0.8 mm. The upper ring is designed with possibility of displacement to adjust the gap. Compressed air is coming inside through a hole in one of the supporting rods to blow the tube of polyethylene and to produce thin film. Hard coatings 15 and 16 are made to diminish wear of the die. For example the coating could be produced by galvanic deposition of platinum or rhodium. Such coating is not only hard but is also catalytic active, what is necessary to cure elastomers in a reaction of hydrosilation.

Polyethylene melt, which is shown at Figure 10 by gray color, is pressed from upside along an annular channel with diameter 50 mm in a form of a tube. An extruder from Company Goettfert [61] with diameter of a screw D=30 mm, rotation speed up to 100 RPM and maximum pressure 1000 bar was used to supply molten polyethylene. Polyethylene of low density LDPE and metallocene based linear low density polyethylene Exceed 1018 EB from Company ExxonMobil were used. The polyethylene Exced 1018 EB is characterized by following parameters: density - 0.918 g per cm3, melting point - 118°C, Melt Index - 1 g per 10 min, recommended by producer temperature of extrusion 190 - 220°C. Melt fracture defects were detected at a screw rotation speed 10 RPM and rate of extrusion 2 mm per sec.

Granules of low-density polyethylene LDPE were loaded in a feeder of extruder. We have used two-component silicone rubber with trade name "Elastosil RT 601 "from Company Wacker Chemie. First a component B (silanes with catalyst) was mixed with granules of polymeric material in amount 1 g per 3 kg of granules. So, the content of additives in polyethylene was 0.03 weight %. Extrusion of 1 kg of the blend with additives has been done. Then extrusion of 1 kg of pure polyethylene has been done to purge the extruder from additives of a component B. Then a component A (siloxanes with non saturated bond C=C) was mixed with granules of polymeric material in proportion 1g of component A to 1 kg of granules, that is for amount of additives in polyethylene 0.1 weight %. It has been detected that after 10 min after supply of component A extrusion pressure dropped 8% while torque of the screw dropped 23%. The product has no roughness at the surface. Then instead of low density polyethylene (LDPE) granules of metallocene polyethylene (mPE) Exceed 1018 EB were loaded in a feeder. Product had no defects. The tube was blown by compressed air. The resulting film was characterized by even surface at rate of extrusion 8.7mm per sec or 60 g per min, which is the maximum possible rate of extrusion for the used extruder. This velocity is much higher in comparison with onset of melt fracture when elastic coating was used. Wear of the coating during 1 hour of extrusion was not detected.

Therefore, deposition of an elastic coating at flight, i.e. in extrusion process of polymeric material with additives, in a particular case of successive supply of additives during extrusion, results in high rate of defect free extrusion.

### Example 6

Method has been realized by extrusion through an annular die, which is presented schematically at Figure 10 with the use of a screw extruder. Granules of low density polyethylene (LDPE) were loaded in a feeder of extruder. Two component silicone rubber of trade name "ELASTOSIL RT 601" from Company Wacker Chemie [35] was used as the silicone elastomer. First, a component A (siloxanes with nonsaturated bond C=C) was mixed with granules of polyethylene in amount of 0.5 g per 1kg of granules that is at 0.05 weight %. 1kg of the granules blended with the additives was extruded. Then a component B (silanes with catalyst) were mixed with granules of polyethylene in amount of 0.1 g of additives to 1 kg of the granules, that is 0.01 weight %. 1 kg of the blend was extruded at velocity 10 mm per sec or 72 g per min. It takes at least 2 min 20 sec at this velocity for the polymeric material to come through the extruder. However there are zones of mixing in the extruder where the material circulates about 10-15 min at this extrusion rate. In the previous example purging of the extruder by pure polyethylene has been done. In this example the purging was not done. Roughness of the product much increased after about 3 min since supply of polyethylene with the additives of the component B. This could be explained so that mixing of both components and curing of rubber are going inside the extruder. The cured rubber, which is present in the plastic material do not slip along the coating at the die surface, what increases roughness of the product. After about 10 min of extrusion the product surface became again even, what indicates a drop of content of vulcanized rubber. Extrusion of polyethylene without additives has been done afterwards. The product surface had no roughness.

So, when simultaneous supply of both components of raw rubber is used for deposition of coating at flight that is during extrusion of polymer, which has both components of rubber, the product surface has increased roughness.

### Example 7

Method has been realized by extrusion through an annular die, which is presented schematically at Figure 10 with the use of a screw extruder described in Example 4. Granules of low density polyethylene (LDPE) with additives of one component raw silicone rubber "Elastosil N10" from Company Wacker Chemie [35] were used. The raw rubber was diluted by Xylene in proportion 2 parts of Xylene to 1 part of raw rubber and mixed with granules of polyethylene. The portion of raw rubber in polyethylene was about 0.01 weight %. Less roughness of product and 1.4% pressure drop were detected after 60 min of extrusion. Then extrusion of polyethylene without additives was done. After 120 min of extrusion no change in roughness or pressure has been detected. It means that if polymeric material does not have abrasion particles then wear of the elastic coating is slow and for compensation of wear 0.001 weight % of additives would be enough.

The present invention could be used also in extrusion of films and fibers from solutions of polymers, protein and viscose. A layer of rubber at the metal surface not only increase the rate of defect free extrusion but diminishes friction losses and also reduces corrosion of metal die or die screen induced by decomposition of polymeric material or by contact of metal with liquids in coagulation bath. The present invention could be used in processing by injection molding, for example to diminish pressure of molding, to improve filling of a mold, and to improve release of product from mold.

It is necessary to note that from state of art it could not be evidently derived that the use of an elastic coating at inner surface of the die in processing of plastics would increase rate of defect free extrusion in comparison with the use of not vulcanized fluorinated elastomers. Therefore the present invention fits to the demand of an "invention level".

The present invention has obvious and essential differences from a prototype. In particular, deposition of an elastic coating is going at flight during process of extrusion at surfaces, which are in contact with molten polymeric material.

The method of dynamic deposition of an elastic coating, which is proposed in the present technical solution, an apparatus for its realization and composition of thermoplastic polymeric material were not known from patent or special literature.

The technical result, that is an increase of rate of defect free extrusion was demonstrated in examples of realization for polyethylene as for the most common polymeric material.

The examples show industrial potential of the proposed method, of the apparatus and the composition with all variants of their possible realization.

So, the present invention is new and satisfies demands of "invention level", could be used in industry, and also results in an improvement of product quality, savings of energy and efficiency of production, that is satisfies to all demands of invention criteria.

### REFERENCES:

1. S. E. Amos, et. al., "Polymer Processing Aids", in a book "Plastics Additives Hand- book", H. Zweifel, Ed., 5th Edition, HANZER, Munich, 2001, pp. 553 - 585.
2. U.S. Patent No.4,707,517; David J. Bullen, et. al.; Nov. 17, 1987, "Polymer composition", U.S. Class: 525/72, IPC: C08L 51/04.
3. http://www.dupont-dow.com/products/vitonff/vitonff.asp
4. http://cms.3m.com/
5. http://www.AtofinaChemicals.com
6. http://www.mrc.co.jp/english/metablen_e/all.html
7. U.S. Patent No. 4,692,379; Keung Jay K. , et al., Sep. 8, 1987; "Heat sealable film and method for its preparation", U.S. Class: 428/349, IPC: B32B 027/00.
8. U.S. Patent No. 6,472,077; Cretekos George F., et al., Oct. 29, 2002, "Block-resistant film", U.S. Class: 428/447, IPC: B32B 027/32.
9. U.S. Patent No. 6,593,400; Drummond Donald Kendall, Jul. 15, 2003, "Talc antiblock compositions and method of preparation", U.S. Class: 523/205, IPC: C08K 009/00.
10. U.S. Patent No. 4,769,418; Mizuno Hajime, et al.; Sep. 6, 1988, "Propylene polymer film", U.S. Class: 525/106, IPC: C08F 006/02.
11. http://www.dowcoming.com/content/plastics/plassilox/
12. http://www.gesilicones.com/silicones/americas/business/portfolio/resins/worksh ops/tospearl.shtml
13. U.S. Patent No. 4,500,688; Arkles Barry C., Feb 19, 1985, "Curable silicone containing compositions and methods of making same", U.S. Class: 525/431, IPC: C08L 059/00.
14. U.S. Patent No. 6,281,286; Chorvath Igor, et al.; Aug. 28, 2001, "Toughened thermoplastic resins", U.S. Class: 524/862, IPC: C08G 077/08.
15. U.S. Patent No. 5,648,426; Zolotnitsky Mikhail, Jul. 15, 1997, "Composition and method for impact modification of thermoplastics", U.S. Class: 525/100, IPC: C08L 083/00.
16. U.S. Patent No. 6,013,715; Gornowicz Gerald Alphonse, et al.; Jan. 11, 2000, "Thermoplastic silicone elastomers", U.S. Class: 524/492, IPC: C08K 003/00.
17. U.S. Patent No. 4,970,263; Arkles Barry C., et al.; Nov. 13, 1990, "Secondary cross-linked semi-interpenetrating polymer networks and methods of making same", U.S. Class: 525/92G, IPC: C08L 083/05.
18. U.S. Patent No. 4,535,113, Foster George N., et al. Aug. 13, 1985, "Olefin polymer compositions containing silicone additives and the use thereof in the production of film material", U.S. Class: 524/262; IPC: C08K 005/54.
19. U.S. Patent No.4,857,593, Leung Pak S. , et al., August 15, 1989, "Process for processing thermoplastic polymers", U.S. Class: 525/92B, IPC: C08L 053/00.
20. U.S. Pat. No. 4,925,890; Leung Pak S., et al.; May 15, 1990, "Process for processing thermoplastic polymers", U.S. Class: 524/133, IPC: C08L 053/00.
21. EP Pat. No. 722 981; Romenesko David J., "Method of modifying polyolefin with diorganopolysiloxane process aid", Jul. 24 1996, IPC: C08L 023/04.
22. U.S. Patent No. 5,789,473; Hauenstein Dale Earl, et al.; Aug. 4, 1998, "Polyolefin composition containing diorganopolysiloxane process aid", U.S. Class: 524/265, IPC: C08J 005/32.
23. U.S. Patent No. 6,013,217, Hauenstein Dale Earl, et al. Jan. 11, 2000, "Method for extruding thermoplastic resins" U.S.Class.: 264/169, IPC: B29C 047/68.
24. U.S. Patent No. 3,125,547; Phillip Strubing Blatz, Mar. 17, 1964, "Extrudable composition consisting of a polyolefin and a fluorocarbon polymer".
25. U.S. Patent No. 4,555,543, Effenberger, John A., et al., Nov. 26, 1985; "Fluoropolymer coating and casting compositions and films derived therefrom", U.S. Class: 524/520, IPC: C08L 027/00.
26. U.S. Patent No. 5,051,479, Logothetis Anestis L., et al., Sep. 24, 1991, "Melt processable TFE copolymers with improved processability", U.S. Class: 525/197, IPC: C08L 027/18.
27. U.S. Patent No. 5,089,200, Chapman Jr.; et al., Feb. 18, 1992, "Process for melt extrusion of polymers", U.S. Class: 264/127, IPC: B29C 047/94.
28. U.S. Patent No. 4,485,062; Dawes James W., et al.; November 27, 1984, "Process for extruding polymers", U.S. Class: 264/173.19; IPC: B29F 003/06
29. S. B. Kharchenko, P. M. McGuiggan, and K. B. Migler, "Flow induced coating of fluoropolymer additives: Development of frustrated total internal reflection imaginG2, J. Rheol. 47 (2003) 1523-1545.
30. A. 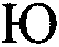 .Γpoc 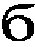 epr, A.P. 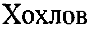 . 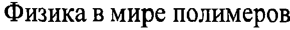 . M., "Hayκa", 1989.
31. A. 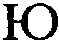 .Γpoc 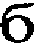 epr, A.P 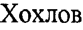 . 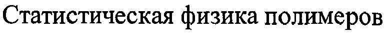 . M., "Hayκa", 1989.
32. http://www.dexcopolymers.com/prodsheets/vector_4111.pdf
33. http://www.basf.de/basf/html/plastics/englisch/pages/styrol/styrofle.htm
34. http://www.kraton.com/
35. http://www.alphagary.com/markets/consumer.html#evoprene
36. Noshay, J. E. McGrath, Block Copolymers: Overview and Critical Survey, Academic Press, New York, 1977.
37. G. Oertel, Ed., Polyurethane Handbook, 2nd Edit., Hanser, New York, 1993.
38. http://www.wacker.com/internet/webcache/en_US/PTM/TM/SILRES/RTV/SIL RES_MSE100.pdf
39. U.S. Patent No. 3,337,497, E. E. Bostick, "Ordered Organopolysiloxanes", Aug. 22, 1967.
40. U.S. Patent No.5,624,754, Choe Eui W., et al., Apr.29, 1997, "Rubber-polyester composites including a sidechain containing copolyester", U.S. Class: 428/373, IPC: D02G 003/00.
41. P. Bajaj, S. K. Varshney, A. Misra, J. Polym. Sci. Polym. Chem. Ed., 1980, 18, 295.
42. S. K. Varshney, C. L. Beatty, Org. Coat. Plast. Chem. Proc., 1981, 45, 152.
43. Yilgoer, G. L. Wilkes, J. E. McGrath, Polym. Prep., 1983, 24(2), 80.
44. Yilgoer, A. K. Shaaban, W. P. Steckle, Jr. D. Tyagi, G. L. Wilkes, J. E. McGrath, Polymer, 1984, 25, 1800.
45. D. Tyagi, I. Yilgoer, J. E. McGrath, G. L. Wilkes, Polymer, 1984, 25, 1087.
46. U.S. Patent No.5,597,651, Choe Eui W., et. al., Jan.28, 1997, "Rubber-polyester composites including polystyrene-polyester copolymers", U.S. Class: 428/373, IPC: D02G 003/00.
47. U.S. Patent No.5,665,822, Bitler Steven P., et. al., "Thermoplastic Elastomers", U.S. Class: 525/92C, IPC: C08L 053/00.
48. http://scholar.lib.vt.edu/theses/available/etd-72698-13572/unrestricted/Disswhl2.pdf
49. U.S. Patent No.3,562,352, Emery Nyilas, "Polysiloxane-Polyuretane block copolymers", Feb. 9, 1971, U.S. Class: 260-824, IPC: C08G 41/04.
50. U.S. Patent No.6,291,587, Bleys Gerhard Jozef, et al. Sep.18, 2001, "Elastomers from compositions comprising rigid thermoplastic polyurethane", U.S. Class: 525/131, IPC: C08L 009/00.
51. U.S. Patent No.6,627,724, Gordon Francis M., et. al., "Polysiloxane-containing polyuretane elastomeric compositions", Sep. 30, 2003, U.S. Class: 528/26, IPC: C08G77/458.
52. http://scholar.lib.vt.edu/theses/available/etd-383911142975720/unrestricted/etd.pdf
53. D. Munteanu, "Crosslinking and controlled Degradation of Polyolefins", in a book Hanz Zweifel, Ed., Plastics Additives Handbook, 5nd Edit., Hanser, Munich, 2001, 725-811.
54. U.S. Patent No. 2,970,150; Donald; L. Bailey, Jan. 31, 1961, "Process for the reaction of silanic hydrogen bonded siloxanes with unsaturated organic compounds with a Platinum catalyst".
55. U.S. Patent No. 4,578,497, Onopchenko Anatoli, et al., Mar. 25, 1986, "Tetraalkyl-silane synthetic fluids", U.S. Class: 556/479, IPC: C07F 007/08.
56. US Patent, No.4,842,504 Bentivoglio, et al., "Lip heater for plastic extrusion die", 27/06/1989, Mκ 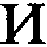 - B29C 047/86.
57. http://www.exxonmobil.com/chemical
58. http://www.loomisproducts.com
59. http://www.wacker.com
60. http://www.surel.ru/
61. http://www.goettfert.com/

| Ta 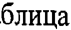 1. | |
|---|---|
| **Polymer** | **Glass transition point** |
| Polyethylsulphone | 190°C |
| Polyvinylpirrolidone | 160°C |
| Polycarbonate of bis-phenol A | 150°C |
| Polymethylmetacrylate | 120°C |
| Polystyrene | 100°C |
| Polytetraftorpolyethylene | -73°C |
| Polymethylphenylsiloxane | -86°C |
| Polydimethylsiloxane | -123°C |

| Ta 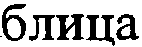 2 | | | | | |
|---|---|---|---|---|---|
| **Coating** | **Thickness, [µm]** | **Defects onset, [mm per sec]** | **Dynamic viscosity, [Pa•s]** | **G1/G2** | **G1/G2**\|**₀** |
| **No coating** | - | 5.4 | 2372 | κ = 1.4 | L = 0.2 |
| **VITON** | 0.07 | 13 | 722 | 0.7 • κ**²** | 1.4 **• KL** |
| **DYNAMAR** | 0.3 | 107 | 4650 | 1.17 • κ**²** | 0.7 • **KL** |
| **TPE-160** | 0.09 | 142 | 645 | 1.22 • κ**²** | 2.5 **• KL** |
| **TPE-140** | 0.36 | 136 | 1840 | 1.53 • κ**²** | 2.5 • **KL** |
| **TPE-120** | 0.64 | 103 | 1815 | 1.38 • κ**²** | 2.1 • **KL** |
| **TPE-80** | 0.45 | 98 | 1170 | 1.22 • κ**²** | 1.4 • **KL** |
| **DYNAMAR**** | 0.07 | 79 | 4650 | 1.17 • κ**²** | 0.7 • **KL** |
| **TPE-160 **** | 0.07 | 105 | 645 | 1.22 • κ**²** | 2.5 • **KL** |

## Claims

1. A method for processing a thermoplastic polymeric material which comprises extrusion of molten thermoplastic polymeric material comprising additives of elastomers through a die-set, wherein an elastic layer substantially coats at least a portion of the die cavity inner wall during extrusion.

2. A method according to claim 1, wherein said portion of the die cavity inner wall is adjacent to its exit and having length not less then 10% of the narrowed flow exit passage.

3. A method according to claim 1 or 2, wherein said thermoplastic polymeric material comprising additives of elastomers in amount from 0.001 to 10 weight % based on the total weight of the composition.

4. A method according to claim 3 comprising following succeeding steps:
a. extrusion of molten thermoplastic polymeric material comprising additives of elastomers in amount from 0.01 to 10 weight % based on the total weight of the composition,
b. extrusion of another thermoplastic polymeric material comprising additives of elastomers in amount from 0 to 1 weight % based on the total weight of the composition.

5. A method according to any claim from 1 to 4, wherein said elastomers are selected from uncured elastomers and they coat at least a portion of the die cavity inner wall and vulcanizing in situ.

6. A method according to any claim from 1 to 4, wherein said elastomers are selected from thermoplastic elastomers.

7. A method according to claim 6, wherein said thermoplastic elastomers having point of glass transition below temperature of processing but above melting temperature of thermoplastic polymeric material and low adhesion to said thermoplastic polymeric material.

8. A method according to claim 5 comprising vulcanizing said uncured elastomers by the reaction of polycondensation or hydrosilation.

9. A method according to claim 8, wherein said portion of the die cavity inner wall having a coating of catalyst to the appropriate reaction of vulcanizing.

10. A method according to claim 9, wherein said catalyst coats said wall during extrusion of said thermoplastic polymeric material.

11. A method according to claim 10 comprising separate in time adding of components of uncured elastomers.

12. A method according to claim 10 comprising adding said catalyst to thermoplastic polymeric material and successive extrusion of another thermoplastic polymeric material.

13. A method according to claim 5, wherein said thermoplastic polymeric material having cross-linking agents.

14. A method according to claim 13, wherein said cross-linking agents are selected from organic peroxides with decomposition temperature above temperature of processing but below decomposition temperature of said thermoplastic polymeric material.

15. A method according to claim 14, wherein vulcanizing of uncured elastomers conducted under such condition as heating at least a portion of the die cavity inner wall adjacent to the die exit till decomposition temperature of said peroxides.

16. An extrusion die for extruding of thermoplastic polymeric material wherein catalysts for appropriate reaction of vulcanization coats at least a portion of the die cavity inner wall.

17. An extrusion die according to claim 16, wherein said catalysts impregnated into rubber coating elastic at processing temperature.

18. A composition of thermoplastic polymeric material comprising polyolefins and elastomers, wherein said elastomers are selected from block copolymers comprising rigid polymers A with point of glass transition above room temperature but below processing temperature and soft polymers B with point of glass transition below room temperature, said block copolymers having structure of linear block copolymers A(BA)ₙ, where n>0, or (BA)ₘ where m> 1 or of graft polymers having soft polymer with at least two grafted segments of rigid polymer and said thermoplastic polymeric material having additives of said elastomers in amount from 0.001 to 10 weight % based on the total weight of the composition.

19. A composition according claim 18, wherein said rigid polymers are selected from a following group: polyethylsulphone, polyvinylpirrolidone, polymethylmetacrylate, polystyrene, rigid polyamide, polyurethane, and said soft polymers are selected from a following group: polymethylphenylsiloxane, polydimethylsiloxane, perfluorinated polyethylene, fluorinated polyethylene or soft copolymers of fluorinated polyolefins with the ratio of fluorine atoms to carbon atoms not less then 1:2.
